**Europäisches Patentamt**

**European Patent Office**

**Office européen des brevets**

(19)

(11) Publication number : **0 472 322 A2**

## (12) EUROPEAN PATENT APPLICATION

(21) Application number : **91307170.0**

(22) Date of filing : **05.08.91**

(51) Int. Cl.⁵ : **B29C 47/52**

(30) Priority : **23.08.90 GB 9019217**

(43) Date of publication of application :
**26.02.92 Bulletin 92/09**

(84) Designated Contracting States :
**DE FR NL**

(71) Applicant : **UNITED KINGDOM ATOMIC ENERGY AUTHORITY**
**11 Charles II Street**
**London SW1Y 4QP (GB)**

(72) Inventor : **Slater, Harold Keith**
**122 Spring Meadow**
**Clayton-Le-Woods, Preston PR5 2LY (GB)**
Inventor : **Coon, Peter Michael**
**23 Eaves Brow Road, Croft**
**Warrington, Cheshire WA3 7LQ (GB)**

(74) Representative : **Owen, Geoffrey John et al**
**United Kingdom Atomic Energy Authority**
**Patents Branch, B329 Harwell Laboratory**
**Oxfordshire OX11 ORA (GB)**

(54) Extrusion of thermoplastics material.

(57) For the continuous extrusion of thermoplastics material and in particular ultra-high molecular weight polymer material, the material is drawn by frictional drag along a passage between a groove (13) in a rotatable wheel (11) and a stationary overlying shoe member (14). An abutment member (15) having an associated extrusion die (16) at the end of the passage is provided with heating means (21) to maintain the temperature of the material being extruded at selected temperatures, preferably above the melting point of the material.

EP 0 472 322 A2

The present invention concerns the continuous extrusion of thermoplastic polymer material.

Ultra-high molecular weight thermoplastic polymer material (UHMWP) is a difficult material to extrude on a continuous basis. Hitherto, such material has generally been worked by high pressure ram extrusion or compression moulding techniques.

According to one aspect of the present invention a method for the continuous extrusion of thermoplastics polymer material comprising introducing the material into a passageway formed between a rotatable wheel member having an endless peripheral groove therein and a stationary overlying shoe member, rotating the wheel member relative to the shoe member to thereby draw the material by frictional drag along the passageway and through an extrusion die associated with an abutment at the end of the passageway and heating the abutment at least in the region of the extrusion die to maintain the material at or above selected temperatures.

Preferably the material comprises powdered thermoplastics material.

Preferably, the selected temperatures are above the melting point of the material.

The feedstock may include other materials so as to extrude a composite plastics material.

The feedstock plastics material may comprise a polymer made from a normal melt processable molecular weight polymer (eg for polyethylene $Mw \leqq 500,000$) where Mw is the weight average molecular weight, or preferably ultra-high molecular weight polymer material (hereinafter referred to as "UHMWP") having a molecular weight of at least about 500,000 for example $1 \times 10^6$.

According to another aspect of the present invention apparatus for the continuous extrusion of thermoplastics polymer material comprises a rotatable wheel member having an endless groove therein, a stationary shoe member overlying a portion of the wheel member to define an extrusion passage, an abutment member projecting from the shoe member into the groove and blocking one end of the passage, an extrusion die having at least one die orifice associated with the abutment member such that on rotation of the wheel member material is carried along the passage by frictional drag towards the abutment member and extruded through the extrusion die, in which heating means at the abutment member in the region of the extrusion die maintain the temperature of the material at or above selected temperatures.

The invention will be described further by way of example only with reference to the accompanying schematic drawing which shows a side view in part-section of an apparatus for continuous extrusion.

A continuous extrusion apparatus 10 comprises a wheel 11 rotatably mounted on a shaft 12. The wheel 11 has an endless circumferential groove 13 around its outer edge, and a shoe member 14 overlies part of the length of the groove 13. An abutment portion 15 associated with the shoe member 14 is shaped so as to project into and substantially block the groove 13. The abutment portion 15 has an extrusion die with at least one die orifice 16 through which material 18 (eg plastics polymer powder) in the groove 13 is extruded as the wheel 11 rotates. In the illustrated arrangement, rotation of the wheel is clockwise. The abutment portion 15 is joined to an extension portion 17 through which a portion of the die orifice 16 extends. Heating means such as electric heating tapes 19 are disposed about the extension 17, and heating means such as electric heating coils 21 are provided in the abutment portion 15.

In operation, as the wheel 11 rotates at a selected speed, the material 18 in the groove 13 is compacted and carried forward by the frictional drag of the walls of the groove 13 and forced against the abutment portion 15. Pressure is thus generated in the material 18 so that it is rapidly compacted and extruded through the orifice 16. The speed, the length of the extension 17, and the temperatures maintained by the heating means 19 and the heating coils 21 above the melting point of the material 18, are arranged in relation to each other such that a continuous relatively high density rod 20 of the material 18 is extruded from the die orifice 16.

Example

Apparatus

Wheel (11) outside diameter - 750 mm
Diameter at base of groove (13) - 690 mm
Width of groove (13) - 15 mm
Distance shoe member (14) (excluding the abutment portion 15) projects into groove (13) 15 mm
Shoe member (14) extends 180° around the wheel (11)
Diameter of extrusion orifice (16) 9.5 mm
Orifice extends at 45° with respect to the groove (13)
Length of orifice (16) including barrel (17) = 750 mm
Temperature maintained by heating tapes (19) - ~200°C
Temperature maintained by heating coils (21) - ~175°C
Speed of wheel (11) - 0.25 rpm
Feedstock: UHMWP powder - 100μm>0 (melting point 140°C)

A continuous rod 20 was extruded having a substantially uniform cross-sectional structure and a relatively high density.

Although the orifice 16 has been shown as extending at 45° with respect to the groove 13, the orifice 16 may extend at some other angle with respect to the groove 13.

It will be appreciated that other polymer materials may be extruded by the afore-described apparatus.

If desired, the heating tapes 19 may be arranged to provide a required temperature profile along the extension 17, for example to provide a cooler region at the exit end of the extension 17.

The speed of the wheel 11 may be controlled at other selected speeds, for example in the range up to 2 rpm but preferably between 0.1 - 0.4 rpm.

Alternative die orifice sizes may be used, for example in the range 4-8 mm, as well as different shapes of extruded product.

The shoe member or at least a portion thereof may be constructed from aluminium bronze as an alternative to a steel shoe member.

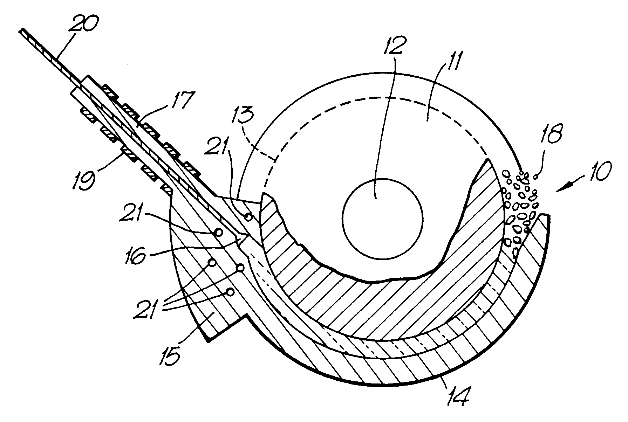

**Claims**

1. A method for the continuous extrusion of thermoplastics polymer material comprising introducing the material into a passageway formed between a rotatable wheel member having an endless peripheral groove therein and a stationary overlying shoe member, rotating the wheel member relative to the shoe member to thereby draw the material by frictional drag along the passageway and through an extrusion die associated with an abutment at the end of the passageway and characterised by heating the abutment portion at least in the region of the extrusion die to maintain the plastics material at or above selected temperatures.

2. A method according to Claim 1 characterised by heating to maintain the temperature of the material above its melting point.

3. Apparatus for the continuous extrusion of thermoplastics polymeric material comprising a rotatable wheel member (11) having an endless groove (13) therein, a stationary shoe member (14) overlying a portion of the wheel member to define an extrusion passage, an abutment member (15) projecting from the shoe member (14) into the groove (13) and blocking one end of the passage, an extrusion die having at least one die orifice (16) associated with the abutment member (15) such that on rotation of the wheel member (11) material is carried along the passage by frictional drag towards the abutment member (15) and extruded through the extrusion die, characterised by heating means (21) at the abutment member (15) in the region of the extrusion die (16) maintain the temperature of the material at selected temperatures.

4. Apparatus according to Claim 3 characterised in that the heating means (21) comprises electric heating coils in the abutment member (15).

5. Apparatus according to Claim 4 characterised by further heating means (19) associated with an extension (17) from the extrusion die (16).

6. Apparatus according to Claim 5 characterised in that the material comprises UHMWP powder.

7. Apparatus according to Claim 6 characterised in that the heating means (21) maintain the temperature of the abutment member (15) in the region of 175°C.